Europäisches Patentamt

European Patent Office

Office européen des brevets

(19)

(11) Veröffentlichungsnummer : **0 400 380 B1**

(12) # EUROPÄISCHE PATENTSCHRIFT

(45) Veröffentlichungstag der Patentschrift :
**02.12.92 Patentblatt 92/49**

(51) Int. Cl.$^5$ : **B65B 27/12, A01F 15/14**

(21) Anmeldenummer : **90108965.6**

(22) Anmeldetag : **12.05.90**

(54) **Vorrichtung zum Umschnüren von in einer Ballenpresse hergestellten Ballen.**

(30) Priorität : **02.06.89 DE 3918064**

(43) Veröffentlichungstag der Anmeldung :
**05.12.90 Patentblatt 90/49**

(45) Bekanntmachung des Hinweises auf die
Patenterteilung :
**02.12.92 Patentblatt 92/49**

(84) Benannte Vertragsstaaten :
**CH DE ES GB IT LI NL SE**

(56) Entgegenhaltungen :
**EP-A- 0 084 620**
**GB-A- 2 028 220**
**US-A- 3 850 091**

(73) Patentinhaber : **Lindemann Maschinenfabrik
GmbH
Erkrather Strasse 401
W-4000 Düsseldorf 1 (DE)**

(72) Erfinder : **Schönfeld, Joachim
Alte Landstrasse 2
W-4000 Düsseldorf 31 (DE)**
Erfinder : **Werremeyer, Fritz
Jungfernweg 4
W-4150 Krefeld (DE)**

(74) Vertreter : **Bergen, Klaus, Dipl.-Ing. et al
Patentanwälte Dr.-Ing. Reimar König Dipl.-Ing.
Klaus Bergen Wilhelm-Tell-Strasse 14
Postfach 260162
W-4000 Düsseldorf 1 (DE)**

EP 0 400 380 B1

**Beschreibung**

Die Erfindung betrifft eine Vorrichtung in einer Ballenpresse zum Umschnüren von Ballen mit über Führungen und Durchtrittsöffnungen im Preßkastenboden der Ballenpresse zugeführten Schnürmitteln.

Das Umschnüren von Ballen mit Draht oder einem anderen geeigneten, nicht unbedingt metallischen Bindematerial läßt sich auf Ballenpressen durchführen, die entweder mit horizontaler oder mit vertikaler Verschnürung arbeiten. Bei Ballenpressen mit vertikaler Verschnürung läßt sich das Umschnüren auch mit lediglich einem Unterdraht erreichen, der um den Ballen herumgeschlungen wird. Für jeden Ballen sind normalerweise mehrere, parallel zueinander verlaufend zugeführte Drähte erforderlich, deren Anzahl sich nach den Ballenabmessungen richtet. Vor allem dann, wenn die zu umchnürenden Ballen verschieden lang ausfallen, werden sie mittels von Drahtvorratsrollen (Drahtbündelaufnehmern) und Führungsrollen zugeführten Ober- und Unterdrähten verschnürt; nach dem Hochziehen der unterhalb des Preßkastenbodens zugeführten Unterdrähte werden diese an der Oberseite des Ballens mit den Oberdrähten verdrillt.

Eine Ballenpresse dieser Art ist durch die DE-OS 24 19 151 bekanntgeworden. Während des Pressens befinden sich die Schnürnadeln in einer hochgezogenen Position oberhalb des Preßkastens. Die Ballenpresse besitzt eine der Zahl der Drähte entsprechende Zahl in Richtung ihrer Längsachsen beweglicher, in Durchtrittsöffnungen des Preßkastenbodens eintauchender Schnürnadeln. Nach dem Fertigpressen eines Ballens werden die auf und ab beweglichen, mit einem Fanghaken versehenen Schnürnadeln abgesenkt. Die Decke und der Boden des Preßkanals weisen Durchtrittsöffnungen und der Kopf des Preßstempels Nuten auf, die von den Schnürnadeln durchquert werden, um vom Unterdraht eine Schleife bis über die Oberseite des Preßkanals hochzuziehen, so daß sich das Verdrillen mit dem Oberdraht anschließen kann.

Bei dem in derartigen Ballenpressen zu verarbeitenden Material kann es sich um verschiedene Stoffe handeln, beispielsweise Altpapier oder aber auch Müll jeder Art, der neben trockenen auch feuchte sowie verschieden große Bestandteile enthält; sehr sperrige Großteile sind zum Beispiel im Gewerbemüll enthalten. Es läßt sich nicht verhindern, und zwar sowohl bei horizontaler als auch insbesondere bei vertikaler Verschnürung, daß beim Pressen dieser Stoffe zu verpressendes Material in die für die Schnürnadeln bestimmten Durchtrittsöffnungen gelangt bzw. hindurchfällt und zu Materialansammlungen auf den Drähten, insbesondere auf den unterhalb des Preßkastenbodens verlaufenden Unterdrähten führt; beispielsweise umschlingt insbesondere Plastikmaterial die Drähte. Aufgrund dieser Materialansammlungen läßt es sich nicht völlig ausschließen, daß eine oder mehrere Schnürnadeln den zugehörigen Draht nicht erfassen und dann leer hochgezogen bzw. horizontal weggezogen werden. Im automatischen Betrieb einer Ballenpresse werden solche Leerhübe nicht festgestellt, so daß entsprechend gegebenenfalls mehrere Schnürschleifen nicht gebildet werden können. Dies hat nicht nur den Nachteil einer unzureichenden Verschnürung zur Folge, sondern führt bei Ballenpressen mit vertikaler Verschnürung auch dazu, daß in den betroffenen Verschnürungsebenen der Unterdraht außerdem nicht mit dem Oberdraht zur Aufnahme des nachfolgenden Ballens verbunden wird und somit auch der nachfolgende Ballen nicht vorschriftsmäßig verschnürt wird. Um eine damit unweigerlich hervorgerufene Störung des Betriebsablaufs zu beheben, muß das unzureichend verschnürte Ballenmaterial aus dem Preßkanal entfernt werden, was nicht zur Zeit beansprucht und mit einem großen Arbeitsaufwand verbunden ist, sondern auch die Betriebsleistung der Ballenpresse erheblich beeinträchtigt.

Damit sich bei einer Vorrichtung zum Umschnüren von Ballen Materialansammlungen an den Schnürmitteln und -nadeln zumindest periodisch entfernen lassen, ist es durch die GB-A-2 028 220 bekanntgeworden, den Schnürnadeln schwenkbare Reinigungselemente zuzuordnen.

Der Erfindung liegt die Aufgabe zugrunde, eine Vorrichtung der eingangs genannten Art so weiterzubilden, daß die genannten Nachteile nicht mehr auftreten und insbesondere das zu unzureichend verschnürten Ballen führende Verschmutzen der Unterdrähte verhindert wird.

Diese Aufgabe wird erfindungsgemäß dadurch gelöst, daß zumindest die in der Preßrichtung der Ballexpresse unmittelbar vor den Durchtrittsöffnungen für Schnürnadeln angeordneten Schnürmittelzuführungen, vorzugsweise die einen Unterdraht zuführenden Führungsrollen, quer zur Preßrichtung verschiebbar sind. Damit die führungsrollen nicht einzeln verschoben zu werden brauchen, wie vorteilhaft mittels eines hydraulischen und/oder pneumatischen Stellzylinders, sondern sich gemeinsam verschieben lassen, sind sie vorzugsweise auf einer axial verschiebbaren Tragachse angeordnet. Aufgrund der erfindungsgemäß quer verschiebbaren Führungsrollen wird erreicht, daß diese und damit die in den Führungsnuten dieser Rollen laufenden Unterdrähte während des Pressens in einen Bereich seitlich außerhalb der Durchtrittsöffnungen verschoben werden können. Die Drähte werden somit entweder völlig von dem Preßkastenboden abgedeckt, oder ragen allenfalls soweit in den Querschnitt der Durchtrittsöffnungen hinein, daß herabfallendes Preßmaterial sich nicht um die Drähte schlingen kann, sondern von diesen abgleitet.

Der Fanghaken der abgesenkten bzw. eingefahrenen Schnürnadel trifft somit immer auf einen von das Einhaken bzw. -rasten in den Fanghaken beeinträchtigenden Schmutzansammlungen freien Draht. Die Führungsrollen werden erst dann wieder in ihre Ausgangsstellung zurückbewegt, wenn sich der Preßstempel nach Abschluß des Preßvorgangs in der Verschnürposition befindet, und zwar möglichst erst nach dem Absenken bzw. Einfahren der Schnürnadeln in den Aufnahmebereich der Schnürnadeln; es lassen sich dann nämlich die sauberen Unterdrähte gleich auf die aufnahmebereiten Fanghaken der Schnürnadeln überleiten.

Es empfiehlt sich, daß die Führungsrollen eine zu der Tragachse parallele Führungsstange mit Gleitlagern umschließen. Während die Tragachse die axialen Verschiebebewegungen von z.B. 50 mm mitmachen, lagert die Führungsstange starr im Pressenrahmen bzw. -gehäuse; sie unterstützt das gerade, verkantungsfreie Führen der Rollen beim Verschieben.

Nach einer bevorzugten Ausgestaltung der Erfindung wird vorgeschlagen, daß an den in Verschieberichtung der Führungsrollen hinteren Seiten der Durchtrittsöffnungen unterhalb des Preßkastenbodens angeordnete Leitbleche in die Durchtrittsöffnungen hineinragen. Diese die Durchtrittsöffnungen nach unten flächig verlängernden Leitbleche dienen als Anlagefläche und Führung für die seitlich verschobenen Unterdrähte; sie verhindern Schmutzansammlungen an den Unterdrähten. Die Unterdrähte liegen den Leitblechen nämlich bündig an, so daß sich keine Materialien um die Drähte schlingen können; herabfallende Teile werden vielmehr nach unten bis auf den Hüttenflur abgeleitet, wo sie keine Betriebsstörungen verursachen können.

Die in die Durchtrittsöffnungen ragenden oberen Enden der keilförmigen Leitbleche lassen sich vorteilhaft doppelt-keilförmig prismatisch formen. Aufgrund des axialen Abstandes zwischen den Führungsrollen in ihrer Verschiebeposition und den prismenförmigen Leitblechen, an deren Keilflächen sich die Unterdrähte anlegen, ergibt sich ein eingespannter, axial ausgelenkt verlaufender Drahtabschnitt mit entsprechend erhöhter Drahtspannung und damit ein strammes Anliegen des Drahtes an dem Leitblech. Die Leitbleche bieten den großen Vorteil, daß einerseits die durch die verschobenen Führungsrollen an die Leitbleche angedrückten Unterdrähte während des gesamten Pressens verschmutzungsfrei geführt sind und andererseits dennoch von den Leitblechen in die richtige Lage an der Ballenunterseite gebracht bzw. geleitet werden, in der sie in einer Vertikalebene mit den Oberdrähten verlaufen, so daß Ober- und Unterdraht später an der Oberseite des Ballens miteinander verknüpft werden können.

Die Erfindung wird anhand des in den Zeichnungen dargestellten Ausführungsbeispiels näher erläutert. Es zeigen:

Fig. 1 eine erfindungsgemäße Ballenpresse, schematisch in der Seitenansicht;

Fig. 2 die Ballenpresse gemäß Fig. 1 zu einem anderen Zeitpunkt des Arbeitsablaufs beim Verschnüren;

Fig. 3 als Einzelheit eine Teilansicht der Ballenpresse gemäß Fig. 1, in Richtung der Linie III-III gesehen;

Fig. 4 die Einzelheit gemäß Fig. 3 in der Draufsicht; und

Fig. 5 einen Schnitt entlang der Linie V-V von Fig. 4.

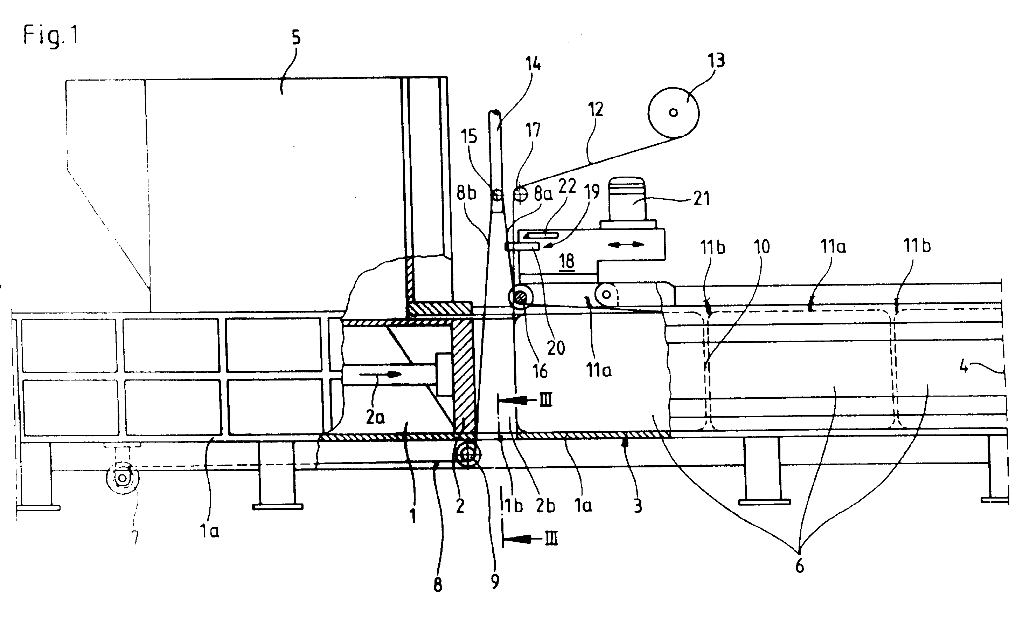

Gemäß Fig. 1 besteht die Ballenpresse im wesentlichen aus einem rechteckigen Preßkasten 1 mit Preßstempel 2, sowie einem nicht dargestellten Stempelantrieb. An den Preßkasten 1 schließt sich ein Preßkanal 3 an, dessen Querschnitt sich, gerechnet vom Preßkasten 1 bis zur Kanalaustrittsöffnung 4 zum Erzeugen der gewünschten Gegenkraft geringfügig verengt. Zu diesem Zweck ist mindestens eine Wand des Preßkanals 3 in ihrer Neigung verstellbar.

In den Preßkasten 1 mündet von oben ein Füllschacht 5, durch den das zu verpressende Material aufgegeben wird. Zum Herstellen jedes Ballens sind mehrere Arbeitshübe des Preßstempels 2 in der durch einen Pfeil gekennzeichneten Preßrichtung 2a erforderlich. Im dargestellten Beispiel befinden sich im Preßkanal 3 drei gepreßte Ballen 6, von denen der mittlere und der rechte bereits mit Draht verschnürt sind, während der linke zum Verschnüren bereit steht.

Von einer unteren Vorratsrolle 7 läuft ein Unterdraht 8 unterhalb des Preßkastenbodens 1a über eine Führungsrolle 9 um die vordere Stirnseite 10 des gerade zu verschnürenden Ballen herum und ist an der Oberseite dieses Ballens über eine Verdrillung 11a mit einem Oberdraht 12 verbunden, der von einer oberen Vorratsrolle 13 abgezogen wird. Eine in Richtung ihrer Längsachse auf und ab bewegliche Schnürnadel 14 mit Fanghaken 15 - der Einfachheit halber ist in Fig. 1 lediglich eine Schnürnadel für eine Drahtschleife dargestellt, von denen in praktischer Ausführung mehrere fluchtend senkrecht zur Zeichenebene angeordnet sind - kann zum gewünschten Zeitpunkt quer durch den Preßkasten 1 und eine im Kopf des Preßstempels 2 ausgebildete Nut 2b sowie eine im Preßkastenboden 1a vorhandene Durchtrittsöffnung 1b bewegt werden und vom Unterdraht 8 eine Drahtschleife 8a, 8b bis über die Oberseite des Preßkanals hochziehen, so daß die der Ballenrückseite zugeordnete Drahtstrecke 8a der Drahtschleife in eine Lage eng benachbart zu dem zwischen zwei Umlenkrollen 16, 17 senkrecht gespannt gehaltenen Oberdraht 12 kommt.

Auf dem Preßkanal 3 ist ein Gehäuse 18 auf nicht dargestellten Schienen hin und her verfahrbar angeordnet. Das Gehäuse 18 ist Träger eines Verschnürkopfes 19, der in die Drähte 8, 12 einschwenkt und diese miteinander verdrillt. In Fig. 1 ist der Verschnürkopf 19 im bereits eingefahrenen Zustand gezeichnet. Er enthält u.a. ein Drillrad 20 mit einem Schlitz, welches von einem Motor 21 angetrieben wird. Dabei entstehen die Verdrillungen 11a und 11b, die später mittels eines oberhalb des Drillrades 20 befindlichen Schneidmessers 22 voneinander getrennt werden.

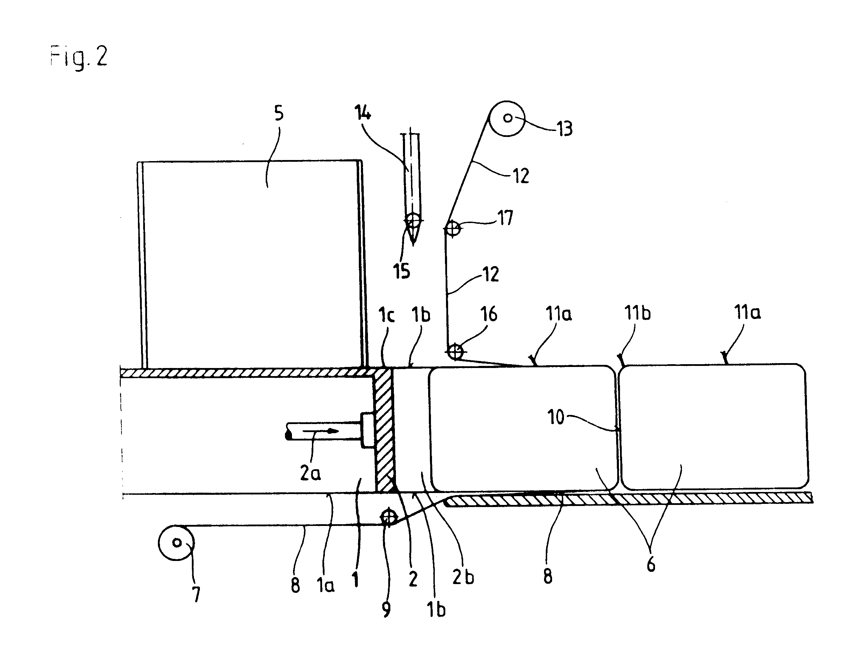

Anhand der in Fig. 2 dargestellten Zwischenstufe beim Verschnüren eines Ballens 6 ist ersichtlich, daß die unterhalb des Preßkastenbodens 1a verlaufenden Unterdrähte 8 im Bereich der sowohl im Preßkastendeckel 1c als auch im Preßstempel 2 sowie im Preßkastenboden 1a für den Durchtritt der Schnürnadeln 14 erforderlichen Durchtrittsöffnungen 1b und Schnürnuten 2b herabfallendem Preßmaterial ungeschützt ausgesetzt sind. Die Schnürnadel 14 befindet sich dort noch oben in Wartestellung, bevor sie nach unten abgesenkt wird, um den Unterdraht 8 zu erfassen, nach oben zu ziehen und anschließend das Verdrillen der Drähte 8 und 12 und damit Verschnüren der Ballen 6 zu ermöglichen.

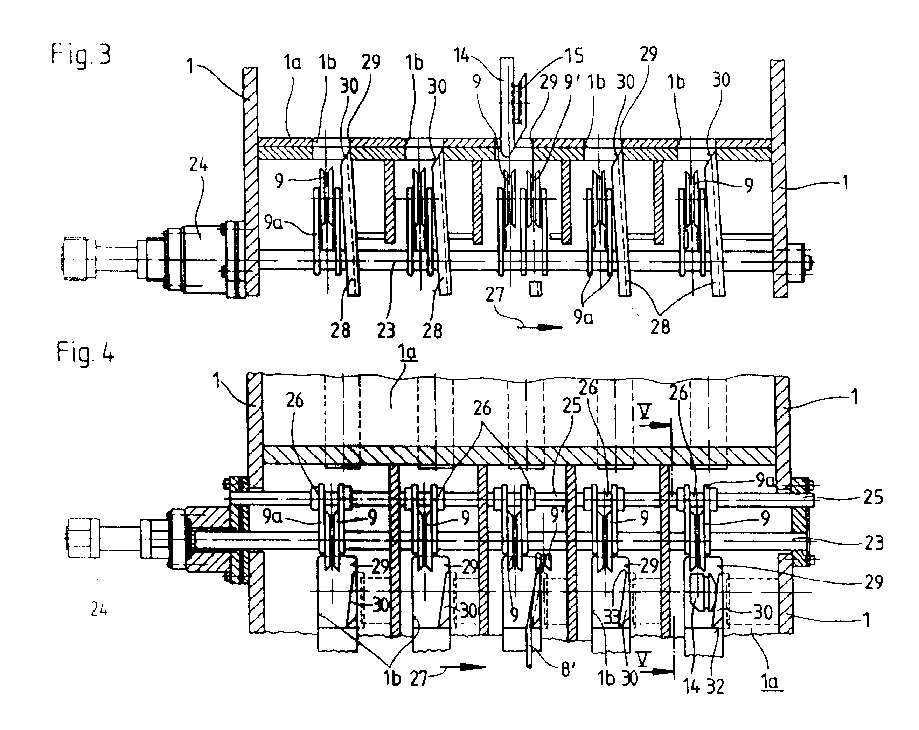

Wie in den Fig. 3 und 4 dargestellt ist, sind alle Führungsrollen 9 auf einer gemeinsamen Tragachse 23 angeordnet, die axial beweglich im Preßkasten 1 gelagert ist. Zum axialen Verstellen ist an der in den Zeichnungen linken Seite an den Preßkasten 1 ein die Tragachse 23 beaufschlagender Stellzylinder 24 angeflanscht. Parallel zur Tragachse 23 verläuft eine im Preßkasten 1 starr angeordnete Führungsstange 25; die Führungsrollen 9 lagern in Flanschen 9a, die mit Gleitlagern 26 versehen sind, die die Führungsstange 25 umschließen.

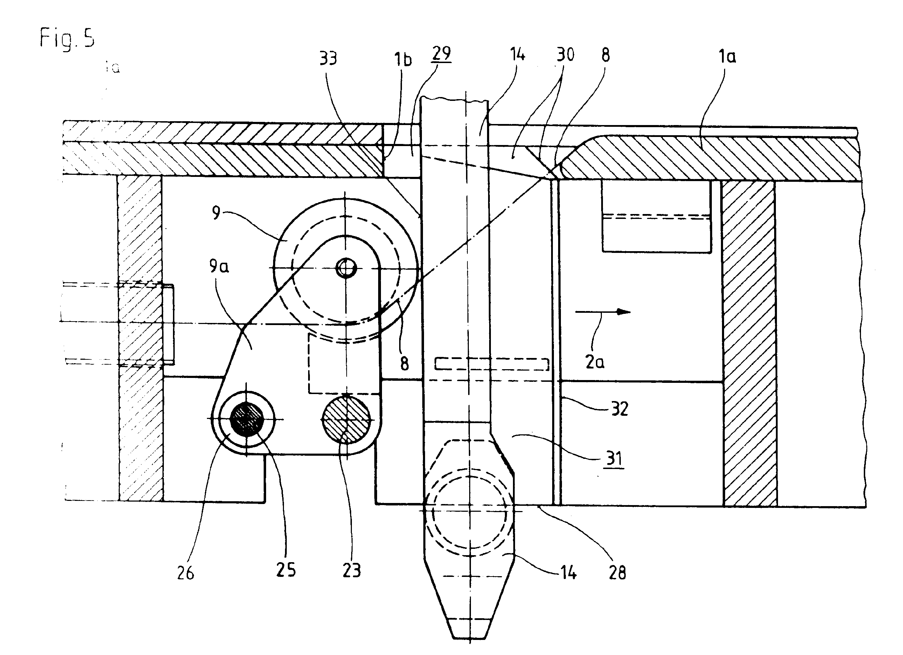

Durch Beaufschlagen des Stellzylinders 24 und damit Verschieben der Tragachse 23 in Pfeilrichtung 27 werden die Führungsrollen 9 zusammen mit der Tragachse 23 in der Zeichnung nach rechts verschoben, bis sie sich an Leitbleche 28 anlegen. Die keilförmigen Leitbleche 28 sind unterhalb des Preßkastenbodens 1a angeordnet und ragen mit ihren oberen Enden 30 an den in Verschieberichtung 27 hinteren Seiten 29 der Durchtrittsöffnungen 1b bis in die Durchtrittsöffnungen 1b hinein, ohne diese jedoch völlig zu durchdringen (vgl. die Fig. 3 und 5). Sobald die Führungsrollen 9 ihre in Pfeilrichtung 27 verschobene Endlage einnehmen, die in den Fig. 3 und 4 aus Gründen der Einfachheit lediglich für die jeweils mittlere, mit 9' bezifferter Führungsrolle dargestellt ist, werden sie weitestgehend vom Preßkastenboden 1a nach oben abgedeckt, so daß eventuell herunterfallendes Preßmaterial, ohne an den Unterdrähten 8 hängen zu bleiben, durch die Durchtrittsöffnungen 1b hindurchfallen kann.

Wie sich insbesondere der Fig. 5 entnehmen läßt, sind die in die Durchtrittsöffnungen 1b hineinragenden Enden 30 des keilförmigen, sich in Preßrichtung 2a verdickenden Leitblechs 28 doppelt-keilförmig prismatisch geformt. In der in Pfeilrichtung 27 - quer zur Preßrichtung 2a - verschobenen Endlage der mit ihrer Rollennut in die Unterdrähte 8 eintauchenden und die schräg ansteigenden, nach oben zum Preßkastenboden 1a verlaufenden Unterdrähte 8 umlenkenden Führungsrollen 9 liegen die Unterdrähte 8 den Leitblechen 28 unter Spannung an; diese das Ableiten herabfallenden Preßmaterials begünstigende Anlage-Position ist in Fig. 4 für die mittlere Führungsrolle 9' und den von dieser Rolle umgelenkten Unterdraht 8' schematisch dargestellt. Die Unterdrähte 8 verlaufen dabei sowohl über die doppelt-keilförmig prismatisch geformten Enden 30, als auch die in Preßrichtung 2a ansteigenden Keilflächen 31 der - somit eine dicke Stirnseite 32 entfernt von und eine dünne Stirnseite 33 benachbart zu den Führungsrollen 9 aufweisenden - Leitbleche 28. Die Keilflächen 31 bzw. keilförmigen Enden 30 ermöglichen eine gespannte Anlage der Unterdrähte 8 an den Leitblechen 28 und entsprechend ihren Neigungen eine allmähliche, von schroffen Umlenkungen freie, in Richtung des Drahtlaufs seitliche Ausbiegung der Unterdrähte 8, die von den Leitblechen 29 somit in ihre funktionsbedingte Mittenlage unter den Ballen 6 geführt werden.

## Patentansprüche

1.  Einer Ballenpresse zugeordnete Vorrichtung zum Umschnüren von Ballen (6) mit über Führungen und Durchtrittsöffnungen (1b) in einem Preßkastenboden (1a) der Ballenpresse zugeführten Schnürmitteln, dadurch gekennzeichnet, daß zumindest die in der Preßrichtung (2a) der Ballenpresse unmittelbar vor den Durchtrittsöffnungen (1b) für Schnürnadeln (14) angeordneten Schnürmittelzuführungen (9) quer zur Preßrichtung (2a) verschiebbar sind.

2.  Vorrichtung nach Anspruch 1, dadurch gekennzeichnet, daß die Zuführungen als einen Unterdraht (8) zuführende Rollen (9) ausgebildet sind.

3.  Vorrichtung nach Anspruch 2, dadurch gekennzeichnet, daß die Führungsrollen (9) auf einer axial verschiebbaren Tragachse (23) angeordnet sind.

4.  Vorrichtung nach Anspruch 2 oder 3, dadurch gekennzeichnet, daß die Führungsrollen (9) eine zu der Tragachse (23) parallele Führungsstange (25) mit Gleitlagern (26) umschließen.

5.  Vorrichtung nach einem oder mehreren der Ansprüche 2 bis 4, gekennzeichnet durch einen die Führungsrollen (9) verschiebenden Stellzylinder (24).

6.  Vorrichtung nach einem oder mehreren der Ansprüche 2 bis 5, dadurch gekennzeichnet, daß an den in Verschieberichtung (27) der Führungsrollen (9) hinteren Seiten (29) der Durchtrittsöffnungen (1b) unterhalb des Preßkastenbodens (1a) angeordnete Leitbleche (28) in die Durchtrittsöffnungen (1b) hineinragen.

7. Vorrichtung nach Anspruch 6, <u>dadurch gekennzeichnet,</u> daß die in die Durchtrittsöffnungen (1b) ragenden Enden (30) der keilförmigen Leitbleche (28) doppelt-keilförmig prismatisch geformt sind.

**Claims**

1. Apparatus associated with a baling press for binding bales (6) with binder fed in by way of guides and passage openings (1b) in the bottom (1a) of the press, characterised in that at least those binder feeding means (9) arranged directly before the passage openings (1b) for binding needles (14) are displaceable transverse to the pressing direction (2a).

2. Apparatus according to claim 1, characterised in that the feeding means are in the form of pulleys (9) feeding a lower wire (8).

3. Apparatus according to claim 2, characterised in that the guide pulleys (9) are arranged on an axially displaceable supporting axle (23),

4. Apparatus according to claim 2 or claim 3, characterised in that the guide pulleys (9) have sliding bearings (26) surrounding a guide rod (25) parallel to the supporting axle (23).

5. Apparatus according to one or more of claims 2 to 4, characterised by a piston/cylinder adjusting unit (24) serving to displace the guide pulleys (9).

6. Apparatus according to one or more of claims 2 to 5, characterised in that guide plates (28) arranged beneath the bottom of the pressing box (1a) project into the passage openings (1a) on the rear sides (29) of the passage openings (1b) in the direction of displacement (27) of the guide pulleys (9).

7. Apparatus according to claim 6, characterised in that the ends (30) of the wedge-shaped guide plates (28) that project into the passage openings (1b) are shaped as double-wedge-shaped prisms.

**Revendications**

1. Dispositif associé à une presse à faire des balles pour le ficelage des balles (6) par des moyens de ficelage amenés par des dispositifs de guidage, et par des ouvertures de passage (1b) dans un fond (1a) de l'enveloppe de la presse, caractérisé en ce qu'au moins les dispositifs de guidage (9) des moyens de ficelage qui, dans le sens (2a) de la compression de la presse à faire des balles, se trouvent immédiatement en avant des ouvertures de passage (1b) ménagées pour les aiguilles à passer (14) peuvent se déplacer transversalement par rapport au sens (2a) de la compression.

2. Dispositif selon la revendication 1, caractérisé en ce que les dispositifs d'amenée sont constitués par des rouleaux (9) ameanant un fil inférieur (8).

3. Dispositif selon la revendication 2, caractérisé en ce que les rouleaux d'amenée (9) sont montés sur un arbre de support (23) qui peut se déplacer dans le sens axial.

4. Dispositif selon l'une des revendications 2 ou 3, caractérisé en ce que les rouleaux de guidage (9) sont associés à une barre de guidage (25) parallèle à l'axe de support (23) et comportant des paliers à glissement (26).

5. Dispositif selon une ou plusieurs des revendications 2 à 4, caractérisé par un vérin de réglage (24) qui déplace les rouleaux de guidage (9).

6. Dispositif selon une ou plusieurs des revendications 2 à 5, caractérisé en ce que les tôles de guidage (28) montées au-dessous du fond (1a) de l'enveloppe de la presse au niveau des côtés (29) des ouvertures de passage (1b) qui se trouvent en arrière dans le sens (27) du déplacement des rouleaux de guidage (9) pénètrent dans les ouvertures de passage (1b).

7. Dispositif selon la revendication 6, caractérisé en ce que les extrémités (30) des tôles de guidage (28) en forme de coins qui dépassent dans les ouvertures de passsage (1b) ont la forme des prisme à deux coins.

Fig.1

EP 0 400 380 B1

Fig. 2

EP 0 400 380 B1

Fig. 3

Fig. 4

EP 0 400 380 B1

Fig.5

EP 0 400 380 B1